# EUROPEAN PATENT SPECIFICATION

(11) **EP 3 656 534 B1**
(45) Date of publication and mention of the grant of the patent: **09.06.2021**
(21) Application number: 19182550.4
(22) Date of filing: 26.06.2019
(51) Int. Cl.: B29C 51/30, B65B 47/02, B65B 47/10, B29C 65/02, B29C 51/36, B29C 65/18, B29C 65/00, B29C 69/00, B65B 7/16, B65B 9/04, B65B 47/08

(54) **A SYSTEM FOR THERMOFORMABLE FILM PACKAGING OF PORTIONED PRODUCTS AND A MODULAR CONVEYOR EQUIPPED WITH SUCH A SYSTEM**
SYSTEM ZUM VERPACKEN VON PORTIONIERTEN PRODUKTEN IN EINER THERMOFORMBAREN FOLIE UND MODULARER FÖRDERER UMFASSEND SOLCH EINEM SYSTEM
SYSTÈME D`EMBALLAGE SOUS FILM THERMOFORMABLE DE PRODUITS PORTIONNÉS ET CONVOYEUR MODULAIRE ÉQUIPÉ D'UN TEL SYSTÈME

(30) Priority: 26.11.2018 PL 42791518
(43) Date of publication of application: 27.05.2020
(73) Proprietor: Gasiorowski, Marek, 05-503 Glosków (PL)
(72) Inventor: Gasiorowski, Marek, 05-503 Glosków (PL)
(74) Representative: Karcz, Katarzyna

(56) References cited:
- WO-A1-91/07860
- WO-A1-2012/061507
- FR-A1- 2 987 305
- GB-A- 2 461 182

## Description

The invention relates to a system for packaging portioned products in a thermoformable film and a modular conveyor equipped with such a system.

The system according to the invention may be applied in particular (but not limited to) packaging household chemistry products, industrial chemistry products, cosmetics, food and pharmaceutical products. It is especially useful for packaging small products consisting of one or several chemically active substances in a water-soluble film adapted to be dissolved in water. At present, the main group of these products are dishwasher and laundry detergent capsules. Packaging of these substances in a water-soluble film is very advantageous as the product can be used without unpacking. The film gets completely dissolved along with the substances it contains, leaving no waste. The substances packaged in a film constitute the final product, which can come in various shapes and colors, featuring attractive designs.

The machines for packaging products in a film are typically packaging machines in which two or more film layers (films) are thermoformed and/or sealed. The machines operating with two films, i.e. an upper film and a lower film are the most popular.

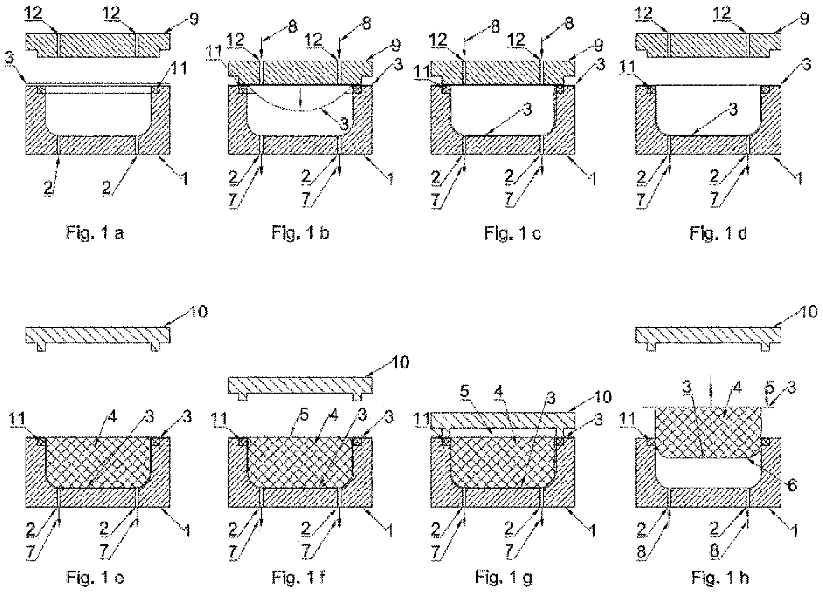

Figures 1a - 1h, 2a-2i and 3a-3h schematically illustrate the known process realized in conventional machines of the above described type. The drawings show one exemplary cavity 1 of a thermoforming mold and selected fragments of a thermoforming plate 9 and a sealing plate 10. Figure 1a shows the beginning of the process with the cavity 1 empty, containing no substance to be packaged.

A film 3 forming the lower film of the packaging, is disposed onto the cavity 1 having a shape corresponding to the shape of the final product 6. In the cavity 1 two channels 2 are provided for supplying vacuum and compressed air. The thermoforming plate 9, initially located above the mold 1, has a very good thermal conductivity. It is typically made of an aluminum alloy and coated with a Teflon layer on its contact side.

The thermoforming plate 9 is provided with channels 12. The thermoforming process is initiated by lowering the heated thermoforming plate 9 onto the mold and pressing the film against the thermoforming plate 9 in order to heat the film up. To assist this process, compressed air is delivered through channels 2 for a short time, pressing the lower film 3 against the thermoforming plate 9. Afterwards, as presented in fig. 1b, vacuum 7 is supplied to the internal channels 2 of the mold, which results in forming the lower film 3. During the thermoforming, air is supplied via the channels 12 of the thermoforming plate 9.

In order to assist the thermoforming process, in some applications, as illustrated in fig. 1b, compressed air 8 is supplied through the channels 12 of the thermoforming plate 9. Fig. 1c illustrates the final stage of the thermoforming process.

The lower film 3 adheres to the cavity 1 over its entire surface. In fig. 1d the thermoforming plate 9 is raised again and the cavity 1 is ready to be filled with the substance 4 to be packaged. Fig. 1e presents the cavity 1 filled with the substance 4. The upper part of the mold 1 is provided with a silicon circumferential washer 11 shown in figs. 1a-1h. The washer 11 is not indispensable for the thermoforming process, but it improves abutment of the thermoforming plate 9 to the mold.

Fig. 1e presents the cavity 1 filled with the substance 4 prepared for the sealing process in which the substance 4 is being coated with the upper film 5 of the packaging.

Figs. 1f-1g show the sealing of the lower film 3 with the upper film 5. In the currently known sealing process for enclosing substances in sealed packaging the washer 11 is indispensable. Fig. 1f presents the situation in which the upper film 5 has been disposed on the mold and the sealing plate 10 is arranged above the mold. The sealing plate 10 has a very good thermal conductivity. It is typically made of an aluminum alloy and coated with a Teflon layer on its contact side.

The heated sealing plate 10 presses both films supported by the silicon washer 11.

As opposed to the sealing plate 10, the washer 11 has low thermal conductivity which is a typical feature of the commonly produced silicones. Consequently, the thermal energy is easily transferred from the sealing plate 10 to the film 5 over the welding area, while the washer - being a good thermal insulator - reduces energy losses to the mold. The mold is usually made of an aluminum alloy having a good thermal conductivity. Further, due to the fact that the washer 11 is made of an elastic silicone, the welding plate 10 adheres well to the mold over its entire circumference, so as to mitigate production inaccuracies of the mold and the plate 10 and hence assist the welding process.

Due to the natural tendency of the film to return to its original shape, the lower film 3 must be pressed by vacuum 7 to the walls of the cavity 1 throughout the entire process of creation of a final product 6, that is during the thermoforming, the filling of the cavities 1 with the substance 4, the disposal of the upper film 5, the sealing of the upper film 5 with the lower film 3 and the cutting of individual products 6. The result of said processes is shown in fig. 1g. After the process has been completed it is necessary to disconnect vacuum 7 from the cavities 1 and to supply compressed air 8 from their bottom side in order to remove the individual products 6 from the mold, as illustrated in fig. 1h.

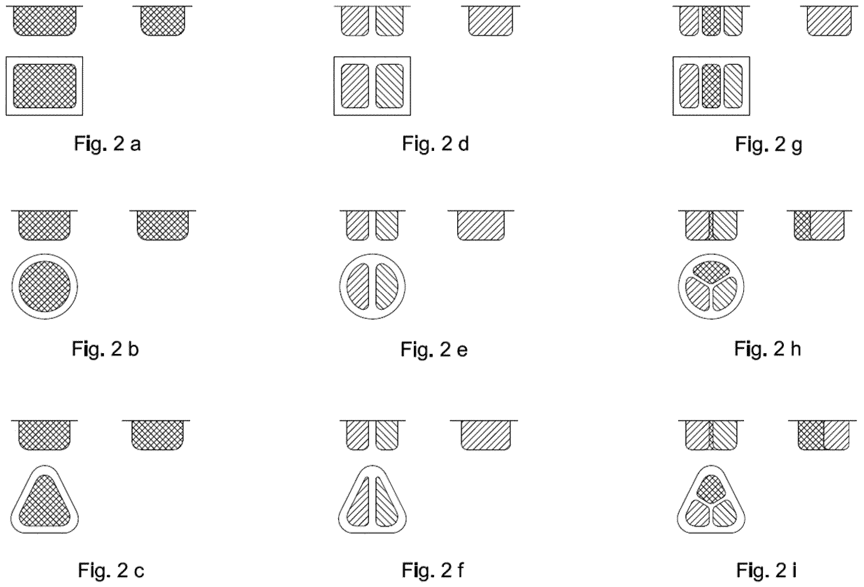

The process described above enables obtaining products of various shapes, containing various numbers of chambers and different substances. Figs. 2a-2i present exemplary products of various shapes and various quantities of components, constituting a single product. Figs. 2a, 2b and 2c present products of various shapes containing a single substance enclosed in two films - the upper and the lower film - sealed together along the edges. Figs. 2d - 2f present products of various shapes containing two substances, packaged in two films welded together along the edges. Fig. 2g - 2i present products of various shapes containing three substances, packaged in two films welded together along the edges. A single product may contain more than one substance, two or three components options being presented in figs. 2a - 2i. At present, the three-component option is the most popular solution.

The products illustrated in the exemplary figs. 2a - 2i are produced in the machines equipped with several hundred to several thousand single cavities 1.

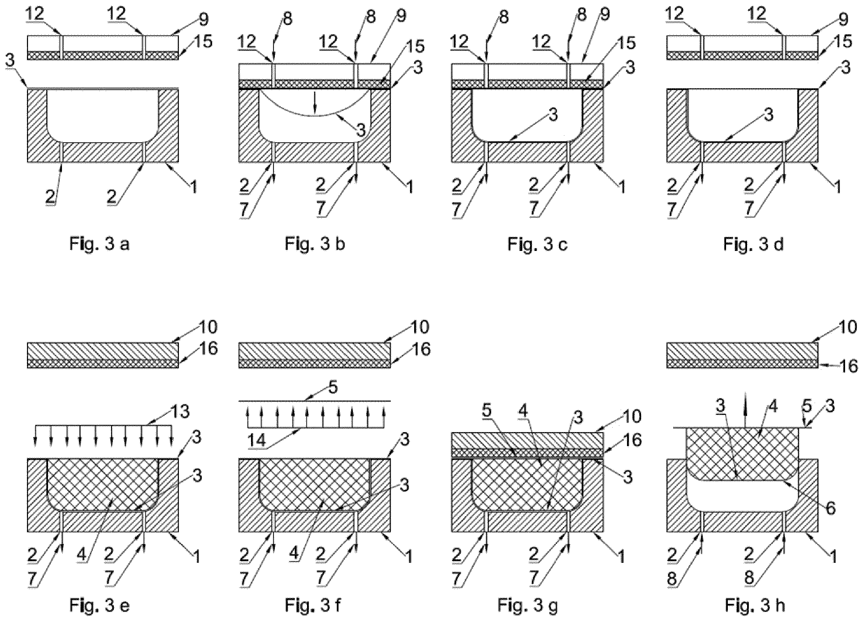

Provision of the silicon washer 11 on each cavity is difficult and expensive. The silicon washers 11 wear out during the operation of the machine, their replacement being labor-intensive and generating substantial exploitation costs. In order to avoid these in the case of the substances packaged in a water-soluble film, the method shown in figs. 3a-3h is used. In this method the mold made of an aluminum alloy does not have the silicon washer; instead the thermoforming plate 9 is coated with a flat layer of silicone 15 on its contact side and the sealing plate 10 is also coated with a flat layer of silicone 16 on its contact side.

Unfortunately, the low thermal conductivity results in poor heat transfer to the film, which is sufficient for the thermoforming process shown in figs. 3a-3d but is completely unsatisfactory in the case of the sealing process shown in figs. 3e-3h. Additionally detrimental to the sealing process is the fact that the aluminum alloy mold readily transfers the heat out of the welding area.

In this case, in order to achieve effective welding to a water-soluble film it is necessary to pre-wet the lower film 3 with water 13 in the area of contact with the upper film 5, and/or to pre-wet the upper film 5 with water 14 in the area of contact with the lower film 3, as shown in figs. 3e and 3f. The pre-wetting results in that the films partially dissolve and consolidate upon contact, pressure and some heat, the consolidation consisting in a mixture of gluing and sealing, with the gluing prevailing. Unfortunately, the use of water involves application of expensive and complicated water supply systems. The water must be applied to the film with great precision. Too little water results in lack of bond and too much water locally or totally dissolves the film. Another factor disqualifying the use of water in the welding of a water-soluble film is the fact that it contacts the substance being packaged. Therefore this method may not be used in the case of packaging the substances that may not be contacted with water.

The aim of the invention was to provide a system for packaging portioned products in a thermoformable film and a modular conveyor equipped with such system, in which the disadvantages of the above described state of art sealing systems would be eliminated.

According to the invention a system for thermoformable film packaging of portioned products is provided, the system including a mold assembly comprising at least one mold the shape of which corresponds to the shape of the portioned products, at least one thermoforming tool and at least one sealing tool, the system being adapted to package the portioned products in a lower thermoformable film which is shaped in the mold by means of the thermoforming tool and sealed with an upper thermoformable film by means of the sealing tool, wherein each of the tools is translated back and forth between its position of pressure against the mold assembly and its position spaced from the mold assembly.

The system according to the invention is characterized in that each mold is made of a material having thermal conductivity at most 0,5 W/(m·K), and in that each sealing tool is provided with an elastic heat conductive layer contacting the sealed film, said layer being made of a material having thermal conductivity at least 3 W/(m·K).

Preferably, the sealing tool consists of an aluminum alloy plate coated with the elastic layer on its side contacting the upper film, said layer being made of a silicone with additives improving its thermal conductivity.

Said elastic layer is preferably made of a mixture of a heat resistant silicone and a copper dust, the weight proportion of the silicone to the copper ranging from 1 ÷ 0,5 to 1 ÷ 1.

The mold is preferably made of a plastic material selected from a group comprising: polyetheretherketone (PEEK), polyvinylidene fluoride (PVDF) and polyethylene terephthalate (PET), or of another material having low thermal conductivity and high mechanical resistance.

Preferably, the thermoforming tool is provided with an elastic heat conductive layer contacting the welded film, said layer being made of a material having thermal conductivity at least 3 W/(m·K).

The elastic layer coating the thermoforming tool is preferably made of a silicone with additives improving the thermal conductivity of said coating.

Preferably, said elastic layer is made of a mixture of a heat resistant silicone and a copper dust, the weight proportion of the silicone to the copper ranging from 1 ÷ 0,5 to 1 ÷ 1.

According to the invention a modular conveyor is provided, for thermoformable film packaging portioned products, the conveyor comprising a plurality of modules forming an endless chain, the endless chain being movable along the conveyor and having an upper part and a lower part.

The modular conveyor being characterized in that it is equipped with the system according to the invention, each module comprising at least one mold assembly and the thermoforming tool and the sealing tool being arranged above the upper part of the conveyor, wherein the sealing tool is arranged downstream of the thermoforming tool as seen in the direction of movement of the conveyor and both tools are vertically translated back and forth.

Preferably, two film feeding rolls are arranged above the upper part of the conveyor, one roll feeding the lower thermoformable film and the other roll feeding the upper thermoformable film to the conveyor.

In the system according to the invention heat energy is effectively and swiftly transferred to the sealing area through the highly conductive elastic layer coating the sealing tool, while the high heat resistance of the mold prevents detrimental escape of the heat from this area. The system according to the invention allows for highly effective and very good quality sealing. Manufacture of the sealing tool (and preferably the thermoforming tool) consisting of an aluminum alloy plate coated with an elastic and highly conductive elastic layer is technologically simple and inexpensive. Even for a machine including several thousand individual cavities it is sufficient to provide a single sealing tool which in one short cycle is able to sealed the film of about a hundred molds. Replacement of a worn out sealing tool is cheap and fast.

Embodiments of the invention are shown in the appended drawings, in which:
Fig. 4a shows one mold of the system according to the invention before the beginning of the thermoforming process,
Fig. 4b shows one mold of the system according to the invention at the beginning of the thermoforming process,
Fig. 4c shows one mold of the system according to the invention by the end of the thermoforming process,
Fig. 4d shows one mold of the system according to the invention after completion of the thermoforming process,
Fig. 4e shows one mold of the system according to the invention upon filling with the packaged substance, before the beginning of the sealing process,
Fig. 4f shows one mold of the system according to the invention, prepared for the sealing process,
Fig. 4g shows one mold of the system according to the invention during the sealing process,
Fig. 4h shows one mold of the system according to the invention, after completion of the sealing process,
Fig. 5a shows a side view of the conveyor according to the invention,
Fig. 5b shows a perspective view of the conveyor according to the invention.

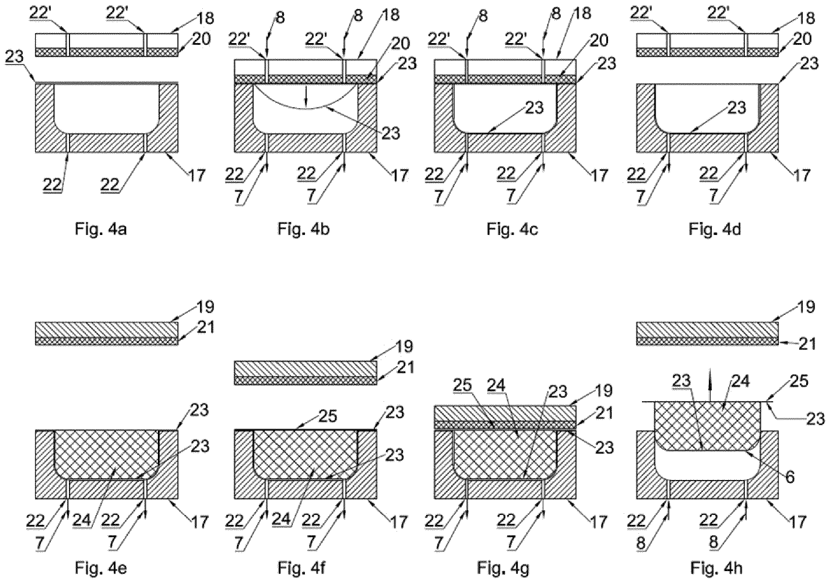

In figs. 4a-4h one exemplary mold 17 of a mold assembly is shown, the mold assembly belonging to the system according to the invention. A thermoforming tool 18 and a sealing tool 19 of the system are also shown. Preferably, the system according to the invention comprises an assembly consisting of a plurality of molds connected together so as to form an integral element.

The essence of the invention is the use of specific materials for the molds 17 and providing the sealing tool 19 with a special elastic layer 21 coating the sealing tool 19 on its side contacting the sealed film in which the product is being packaged.

The material for the mold 17 must have a possibly low thermal conductivity, at most 0,5 W/(m·K). Said material may be e.g. a widely available plastic and composite material of the type of polyetheretherketone (PEEK), polyvinylidene fluoride (PVDF), polyethylene terephthalate (PET), or of any other material having low thermal conductivity and high mechanical resistance.

The material for the elastic layer 21 must have a possibly highest thermal conductivity of at least 3 W/(m·K). This requirement is fulfilled e.g. by commonly available silicone materials with additives improving thermal conductivity. A preferred material for the layer 21 would be e.g. a mixture of a heat resistant silicone and a copper dust, the weight proportion of the silicone to the copper ranging from 1 ÷ 0,5 to 1 ÷ 1. Optionally, the layer 21 can be made of a commercially available silicone under the name of THERMOSIL.

The thermoforming tool 18 may also be coated with an elastic film 20 on its side contacting the thermoformed film 23, the elastic film 20 being made of the same material as the layer 21. This preferred feature improves the thermoforming process, however it is not indispensable.

Both the thermoforming tool 18 and the welding tool 19 are preferably made of an aluminum alloy plate having good thermal conductivity.

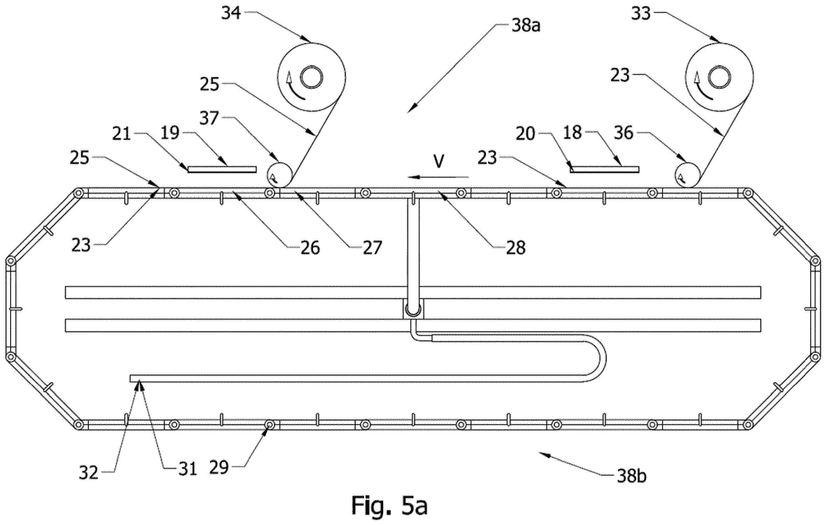

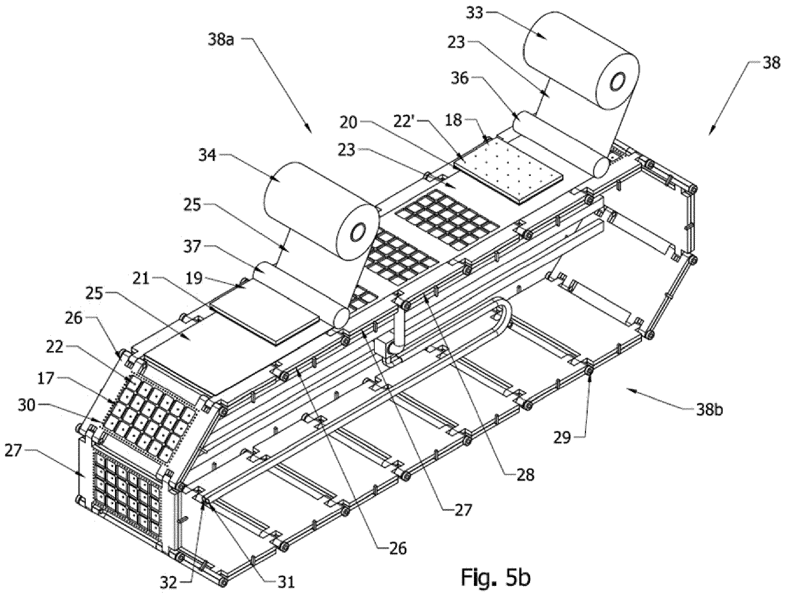

Each of the tools 18 and 19 is cyclically translated back and forth between its position of pressure against the mold 17 assembly and its position spaced from the mold 17 assembly. The mold 17 assembly is preferably translated on the conveyor according to the invention (as described with reference to figs. 5a and 5b) from the thermoforming tool 18 to the welding tool 19.

Figs. 4a-4h illustrate the thermoforming and the sealing of the films 23, 25 in which the product received in the molds 17 is being packaged. Both films, i.e. the lower film 23 and the upper film 25 are thermoformable. As shown, in each mold 17 channels 22 are formed and in the thermoforming tool 18 channels 22' are formed. The channels 22' are designed for supplying compressed air while the channels 22 are designed for supplying compressed air or vacuum, depending on the process.

At the beginning of the process (fig. 4a) the thermoforming tool 18, in this case the thermoforming plate 18, is located above the assembly of the empty molds 17. The lower film 23 is disposed on the mold 17 assembly. The thermoforming process is initiated by lowering the heated thermoforming plate 18 onto the mold 17 assembly and pressing the lower film 23 against the thermoforming plate 18 in order to heat the film 23 up. To assist this process, compressed air is supplied through channels 22 of the molds 17 for a short time, pressing the lower film 23 against the thermoforming plate 18. Afterwards (fig. 4b), vacuum 7 is supplied to the channels 22 of the molds 17, which results in the thermoforming of the lower film 23. At the same time air - preferably compressed air - is supplied via the channels 22' of the thermoforming plate 12, and vacuum 7 is supplied through the channels 22 of the molds 17, assisting in the thermoforming process.

Upon completion of the thermoforming process, the lower film 23 adheres to the molds 17 over their entire surface; when the thermoforming plate 18 is raised again (fig. 4d), the molds 17 are ready to be filled with the substance 24 to be packaged. The molds 17 filled with the substance 24 (fig. 4e) are then covered with the upper film 25 (fig. 4f). The sealing of the lower thermoformed film 23 with the upper film 25 is realized upon lowering of the sealing tool 19 and pressing it against the mold 17 assembly (fig. 4g). After the sealing process has been completed, the individual packaged products are cut out and removed from the molds 17 with the aid of the compressed air supplied to the forms 17 through the channels 22 (fig. 4h).

As the molds 17 are made of a material having possibly low thermal conductivity, while the welding tool 19, and optionally also the thermoforming tool 18, is made of a material having possibly good thermal conductivity and coated with a highly heat conductive layer on the side contacting the welded film, the welding is fast and effective. The use of the washers applied in the known machines may therefore be avoided, which is advantageous as the use of the washers is cumbersome and expensive.

Figs. 5a and 5b present the modular conveyor according to the invention, equipped with the system according to the invention.

The modular conveyor according to the invention is composed of an endless chain formed of a plurality of modules 26, 27, and 28, each module comprising a mold 17 assembly. According to the invention, the molds are made of a material having possibly low thermal conductivity at most 0,5 W/(m·K). The modules are connected by pins received in bearing bushes with guide rollers 29. The modules 26 and 27 are practically identical, differing only in the number and arrangement of the connecting bearing bushes. The module 28 is supplied with media - vacuum and compressed air - the media being distributed to the modules 27 and 26 through the bearing connections between the modules. Optionally, the modules may be mounted on endless driving chains without the use of pins.

Each mold 17 has at least one channel 22 for supplying vacuum during the thermoforming of the lower film 23 or compressed air assisting in the thermoforming or removal of the final product from the molds. Each module has inlet openings 30 for the vacuum used for sucking the lower thermoformed film 23 into the mold. In figs. 5a and 5b, a system supplying vacuum 31 and compressed air 32 is indicated. As shown, two film feeding rolls 33, 34 are installed above the conveyor - the roll 33 for feeding the lower film 23 and the roll 34 for feeding the upper film 25. The conveyor may be an intermittent motion or a continuous motion conveyor.

The lower film 23 is sucked into the molds by means of the vacuum supplied from the inlet openings 30 and the moving conveyor pulls the lower film 23 along simultaneously unrolling it from the roll 33. A roll 36 is designed to assist in delivering the film 23 onto the conveyor. A system of unrolling the upper film 25 operates in a similar way, with a roll 37 assisting in disposing the upper film 25 over the lower film 23. The rolls 33 and 34 are usually powered in order to render the process of delivering both films more efficient. The thermoforming tool 18 having the channels 22' for supplying compressed air assisting in the thermoforming is arranged downstream of the roll 33.

The thermoforming tool 18 is coated with the elastic layer 20 on its side contacting the lower film while being thermoformed. The layer 20 may be made of the same material as the elastic layer 21 coating the sealing tool 19. During the operation of the machine the thermoforming tool 18 is cyclically pressed against the successive modules of the chain so as to perform the thermoforming of the lower film 23 and then cyclically raised. Downstream of the thermoforming tool 18 the molds 17 are filled with the substance to be packaged. The sealing tool 19 is arranged downstream of the roll 34 as seen in the direction of movement of the conveyor. The sealing tool 19 is coated with the elastic layer 21 according to the invention, the layer 21 being made of a material having thermal conductivity of at least 3 W/(m·K). The sealing tool 19 is also cyclically pressed against the successive modules of the chain so as to perform the sealing of the upper film 25 with the lower film 23 and then cyclically raised. Downstream of the sealing tool 19 the film is cut so as to form individual final products that are removed from the molds 17.

## Claims

1. A system for thermoformable film packaging of portioned products, the system including a mold assembly comprising at least one mold (17) the shape of which corresponds to the shape of the portioned products, at least one thermoforming tool (18) and at least one sealing tool (19), the system being adapted to package the portioned products (24) in a lower thermoformable film (23) which is shaped in the mold by means of the thermoforming tool (18) and sealed with an upperfilm (25) by means of the sealing tool (19), wherein each of the tools (18, 19) is translated back and forth between its position of pressure against the mold assembly and its position spaced from the mold assembly, **characterized in that** each form (17) is made of a material having thermal conductivity of at most 0,5 W/(m·K), and **in that** each sealing tool (19) is provided with an elastic heat conductive layer (21) contacting the sealed film (25), the layer (21) being made of a material having thermal conductivity of at least 3 W/(m·K).

2. The system according to claim 1, **characterized in that** the sealing tool (19) consists of an aluminum alloy plate coated with the elastic layer (21) on its side contacting the sealed film, the layer (21) being made of a silicone with additives improving the thermal conductivity of said layer (21).

3. The system according to claim 1, **characterized in that** the elastic layer (21) is made of a mixture of a heat resistant silicone and a copper dust, the weight proportion of the silicone to the copper ranging from 1 ÷ 0,5 to 1 ÷ 1.

4. The system according to any of the claims 1-3, **characterized in that** the form (17) is made of a plastic material selected from a group comprising: polyetheretherketone (PEEK), polyvinylidene fluoride (PVDF) and polyethylene terephthalate (PET), or of another material having low thermal conductivity and high mechanical resistance.

5. The system according to any of the claims 1-3, **characterized in that** the thermoforming tool (18) is provided with an elastic heat conductive layer (20) contacting the lower film (23), the layer (20) being made of a material having thermal conductivity of at least 3 W/(m·K).

6. The system according to claim 5, **characterized in that** the elastic layer (20) coating the thermoforming tool (18) is made of a silicone with additives improving the thermal conductivity said layer (20).

7. The system according to claim 6, **characterized in that** the elastic layer (20) is made of a mixture of a heat resistant silicone and a copper dust, the weight proportion of the silicone to the copper ranging from 1 ÷ 0,5 to 1 ÷ 1.

8. A modular conveyor (38) for thermoformable film packaging of portioned products, the conveyor (38) comprising a plurality of modules (26, 27, 28) forming an endless chain, the endless chain being movable along the conveyor and having an upper part (38a) and a lower part (38b), the modular conveyor being equipped with the system according to any of the claims 1-7, each module comprising at least one mold assembly (17) and the thermoforming tool (18) and the sealing tool (19) being arranged above the upper part (38a) of the conveyor (38), wherein the sealing tool (19) is arranged downstream of the thermoforming tool (18) as seen in the direction of movement of the conveyor (38) and both tools (18, 19) are vertically translated back and forth.

9. The modular conveyor according to claim 8, **characterized in that** two film feeding rolls (33, 34) are arranged above the upper part (38a) of the conveyor (38), one roll (33) feeding the lower thermoformable film (23) and the other roll (34) feeding the upper thermoformable film (25) to the conveyor.

## Patentansprüche

1. System zum Verpacken von portionierten Produkten in einer thermoformbaren Folie, wobei das System eine Formanordnung umfasst, die mindestens eine Form (17), deren Form der Form der portionierten Produkte entspricht, mindestens ein Thermoformwerkzeug (18) und mindestens ein Siegelwerkzeug (19) umfasst, wobei das System geeignet ist, die portionierten Produkte (24) in einer unteren thermoformbaren Folie (23) zu verpacken, die in der Form mittels des Thermoformwerkzeugs (18) geformt und mit einer oberen Folie (25) mittels des Siegelwerkzeugs (19) versiegelt wird, wobei jedes der Werkzeuge (18, 19) zwischen seiner Druckposition gegen die Formanordnung und seiner von der Formanordnung beabstandeten Position hin- und herbewegt wird, **dadurch gekennzeichnet, dass** jede Form (17) aus einem Material mit einer Wärmeleitfähigkeit von höchstens 0,5 W/(m-K) hergestellt ist, und dass jedes Siegelwerkzeug (19) mit einer elastischen wärmeleitenden Schicht (21) versehen ist, die die versiegelte Folie (25) berührt, wobei die Schicht (21) aus einem Material mit einer Wärmeleitfähigkeit von mindestens 3 W/(m-K) hergestellt ist.

2. Das System nach Anspruch 1, **dadurch gekennzeichnet, dass** das Siegelwerkzeug (19) aus einer Platte aus einer Aluminiumlegierung besteht, die auf ihrer die versiegelte Folie berührenden Seite mit der elastischen Schicht (21) beschichtet ist, wobei die Schicht (21) aus einem Silikon mit Zusätzen besteht, die die Wärmeleitfähigkeit der Schicht (21) verbessern.

3. Das System nach Anspruch 1, **dadurch gekennzeichnet, dass** die elastische Schicht (21) aus einem Gemisch aus einem hitzebeständigen Silikon und einem Kupferstaub hergestellt ist, wobei das Gewichtsverhältnis des Silikons zum Kupfer im Bereich von 1 ÷ 0,5 bis 1 ÷ 1 liegt.

4. Das System nach einem der Ansprüche 1-3, **dadurch gekennzeichnet, dass** die Form (17) aus einem Kunststoffmaterial, das aus einer Gruppe von Polyetheretherketon (PEEK), Polyvinylidenfluorid (PVDF) und Polyethylenterephthalat (PET) ausgewählt ist, oder aus einem anderen Material mit geringer Wärmeleitfähigkeit und hoher mechanischer Festigkeit hergestellt ist.

5. Das System nach einem der Ansprüche 1-3, **dadurch gekennzeichnet, dass** das Thermoformwerkzeug (18) mit einer elastischen wärmeleitenden Schicht (20) versehen ist, die die untere Folie (23) berührt, wobei die Schicht (20) aus einem Material mit einer Wärmeleitfähigkeit von mindestens 3 W/(m-K) hergestellt ist.

6. Das System nach Anspruch 5, **dadurch gekennzeichnet, dass** die elastische Schicht (20), die das Thermoformwerkzeug (18) beschichtet, aus einem Silikon mit Zusätzen besteht, die die Wärmeleitfähigkeit dieser Schicht (20) verbessern.

7. Das System nach Anspruch 6, **dadurch gekennzeichnet, dass** die elastische Schicht (20) aus einem Gemisch aus einem hitzebeständigen Silikon und einem Kupferstaub hergestellt ist, wobei das Gewichtsverhältnis des Silikons zum Kupfer im Bereich von 1 ÷ 0,5 bis 1 ÷ 1 liegt.

8. Modularer Förderer (38) zum Verpacken von portionierten Produkten in thermoformbarer Folie, wobei der Förderer (38) eine Vielzahl von Modulen (26, 27, 28) umfasst, die eine Endloskette bilden, wobei die Endloskette entlang des Förderers bewegbar ist und einen oberen Teil (38a) und einen unteren Teil (38b) aufweist, wobei der modulare Förderer
mit dem System nach einem
der Ansprüche 1-7 ausgestattet ist, wobei jedes Modul mindestens eine Formbaugruppe (17) umfasst und das Thermoformwerkzeug (18) und das Siegelwerkzeug (19) oberhalb des oberen Teils (38a) des Förderers (38) angeordnet sind, wobei das Siegelwerkzeug (19) in Bewegungsrichtung des Förderers (38) gesehen hinter dem Thermoformwerkzeug (18) angeordnet ist und beide Werkzeuge (18, 19) vertikal hin und her bewegt werden.

9. Modularer Förderer nach Anspruch 8, **dadurch gekennzeichnet, dass** zwei Folienzuführungswalzen (33, 34) über dem oberen Teil (38a) des Förderers (38) angeordnet sind, wobei eine Walze (33) die untere thermoformbare Folie (23) und die andere Walze (34) die obere thermoformbare Folie (25) dem Förderer zuführt.

## Revendications

1. Un système d'emballage sous film thermoformable de produits portionnés, le système comprenant un ensemble de moule comprenant au moins un moule (17) dont la forme correspond à la forme des produits portionnés, au moins un outil de thermoformage (18) et au moins un outil de scellement (19), le système étant adapté pour emballer les produits portionnés (24) dans un film thermoformable inférieur (23) qui est mis en forme dans le moule au moyen de l'outil de thermoformage (18) et scellé avec un film supérieur (25) au moyen de l'outil de scellement (19), dans lequel chacun des outils (18, 19) est translaté dans les deux sens entre sa position de pression contre l'ensemble de moule et sa position espacée de l'ensemble de moule, **caractérisé en ce que** chaque moule (17) est fait d'un matériau ayant une conductivité thermique d'au plus 0,5 W/(mK), et **en ce que** chaque outil de scellement (19) est pourvu d'une couche élastique conductrice de chaleur (21) en contact avec le film scellé (25), la couche (21) étant faite d'un matériau ayant une conductivité thermique d'au moins 3 W/(mK).

2. Le système selon la revendication 1, **caractérisé en ce que** l'outil de scellement (19) est constitué d'une plaque d'alliage d'aluminium revêtue de la couche élastique (21) sur sa face en contact avec le film scellé, la couche (21) étant en silicone avec des additifs améliorant la conductivité thermique de ladite couche (21).

3. Le système selon la revendication 1, **caractérisé en ce que** la couche élastique (21) est faite d'un mélange d'un silicone résistant à la chaleur et d'une poussière de cuivre, la proportion pondérale de la silicone par rapport au cuivre allant de 1 ÷ 0,5 à 1 ÷ 1.

4. Le système selon l'une quelconque des revendications 1 à 3,**caractérisé en ce que** le moule (17) est fait d'un matériau plastique choisi dans un groupe comprenant : polyétheréthercétone (PEEK), polyfluorure de vinylidène (PVDF) et polyéthylène téréphtalate (PET), ou d'un autre matériau ayant une faible conductivité thermique et une résistance mécanique élevée.

5. Le système selon l'une quelconque des revendications 1 à 3, **caractérisé en ce que** l'outil de thermoformage (18) est pourvu d'une couche élastique conductrice de chaleur (20) en contact avec le film inférieur (23), la couche (20) étant faite d'un matériau ayant une conductivité thermique d'au moins 3 W/(m-K).

6. Le système selon la revendication 5, **caractérisé en ce que** la couche élastique (20) recouvrant l'outil de thermoformage (18) est fait d'un silicone avec des additifs améliorant la conductivité thermique de ladite couche (20).

7. Le système selon la revendication 6, **caractérisé en ce que** la couche élastique (20) est faite d'un mélange d'un silicone résistant à la chaleur et d'une poussière de cuivre, la proportion pondérale de la silicone par rapport au cuivre allant de 1 ÷ 0,5 à 1 ÷ 1.

8. Un convoyeur modulaire (38) pour l'emballage sous film thermoformable de produits portionnés, le convoyeur (38) comprenant une pluralité de modules (26, 27, 28) formant une chaîne sans fin, la chaîne sans fin étant mobile le long du convoyeur et ayant une partie supérieure (38a) et une partie inférieure (38b), le convoyeur modulaire
étant équipé du système selon l'une quelconque
des revendications 1 à 7, chaque module comprenant au moins un ensemble de moule (17) et l'outil de thermoformage (18) et l'outil de scellement (19) étant disposés au-dessus de la partie supérieure (38a) du convoyeur (38), dans lequel l'outil de scellement (19) est disposé en aval de l'outil de thermoformage (18) comme on le voit dans la direction de déplacement du convoyeur (38) et les deux outils (18, 19) sont translatés verticalement dans les deux sens.

9. Le convoyeur modulaire selon la revendication 8, **caractérisé en ce que** deux rouleaux d'alimentation de film (33, 34) sont disposés au-dessus de la partie supérieure (38a) du convoyeur (38), un rouleau (33) alimentant le film thermoformable inférieur (23) et l'autre rouleau (34) alimentant le film thermoformable supérieur (25) au convoyeur.
